# EUROPEAN PATENT APPLICATION

(11) **EP 1 524 842 A2**
(43) Date of publication of application: **20.04.2005**
(21) Application number: 04015268.8
(22) Date of filing: 29.06.2004
(51) Int. Cl.: H04N 1/40

(54) **System and method for generating black and white reproductions of color documents**

(30) Priority: 14.10.2003 US 682910
(71) Applicant: Kabushiki Kaisha Toshiba, Tokyo (JP); Toshiba Tec Kabushiki Kaisha, Chiyoda-ku, Tokyo (JP)
(72) Inventor: Kanno, Hiroki, Chiyoda-ku Tokyo (JP)
(74) Representative: HOFFMANN - EITLE

(57) **Abstract**

A system and method for forming a monochromatic reproduction of a color document using a color CCD sensor includes scanning the color document using the color CCD sensor, generating image data from the scanned color document, and detecting color text data in the image data, said color text data representing a color text portion. A density of the color text data in the image data is adjusted, and the monochromatic reproduction of the color document is formed based on the image data including the adjusted density of the colored text data.

## Description

### FIELD OF THE INVENTION

The present invention relates generally to image processing and, more particularly, to a system and method for generating black and white reproductions of color documents.

### BACKGROUND OF THE INVENTION

In a conventional black and white (B/W) digital copier, the scanner portion has a monochrome charge coupled device (CCD) sensor. When a color document is copied, some parts of the document are illegible because the color document is scanned by the monochrome CCD sensor. Similarly, since certain color text cannot be distinguished from different colored text, color text printed on a color background may be unreadable.

The monochrome CCD sensor only detects a lightness of color that is represented by three light components: lightness, hue and saturation. By only detecting these three light components, the monochrome CCD sensor either cannot read or has difficulty reading color components of a document, such as text or images. In particular, it is not possible to reproduce a color document solely from a lightness signal.

With the overall cost color printers steadily dropping, there has been a corresponding increase in the generation and usage of color documents. As a result, a greater percentage of documents being copied are color documents. Nonetheless, relatively speaking, generating color copies of color documents still remains costly. To reduce the cost, B/W copies are typically made of the color documents. The B/W copies, however, suffer from the above described reproduction problems.

Accordingly, it would be desirable to be able to reproduce more accurate B/W copies of color documents.

### SUMMARY OF THE INVENTION

Briefly, in one aspect of the invention, system and method for forming a monochromatic reproduction of a color document using a color CCD sensor includes scanning the color document using the color CCD sensor, generating image data from the scanned color document, and detecting color text data in the image data, said color text data representing a color text portion. A density of the color text data in the image data is adjusted, and the monochromatic reproduction of the color document is formed based on the image data including the adjusted density of the colored text data.

Further features, aspects and advantages of the present invention will become apparent from the detailed description of preferred embodiments that follows, when considered together with the accompanying figures of drawing.

### BRIEF DESCRIPTION OF THE DRAWINGS

Fig. 1 is a block diagram of an image reproduction system consistent with the present invention.

Fig. 2 is a flow diagram of an image reproduction process consistent with the present invention.

Fig. 3 is a flow diagram of an image data density adjustment process consistent with the present invention.

Fig. 4 is a flow diagram of another image data density adjustment process consistent with the present invention.

Figs. 5A and 5B illustrate a graphical example of an image reproduction consistent with the present invention.

Figs. 6A and 6B illustrate another graphical example of an image reproduction consistent with the present invention.

Figs. 7A and 7B illustrate is another graphical example of an image reproduction consistent with the present invention.

### DETAILED DESCRIPTION OF PREFERRED EMBODIMENTS OF THE INVENTIONS

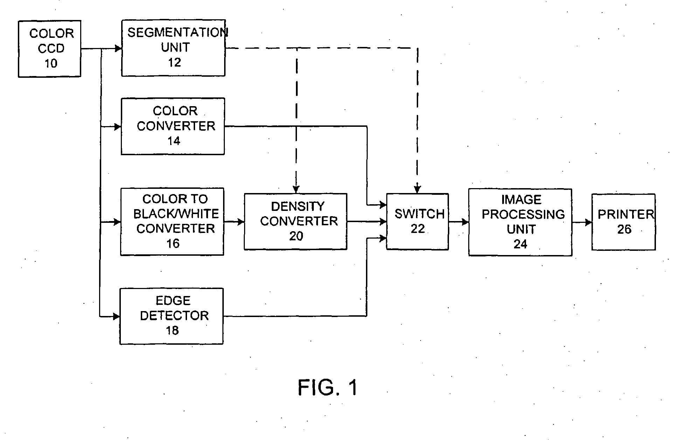

Fig. 1 is a block diagram of an image reproduction system consistent with the present invention. As shown in Fig. 1, the image reproduction system includes a color charge-coupled device (CCD) 10, a segmentation unit 12, a color converter 14, a color to black and white (B/W) converter 16, an edge detector 18 and a density converter 20. The image reproduction system also includes a switch 22, an image processing unit 24 and a printer 26.

The color CCD 10 may be a 3-line sensor having red, green and blue sensors, or a 4-line CCD sensor, which further includes a monochromatic sensor. The color CCD 10 is configured to detect an original image scanned by a scanner (not shown) in the image reproduction system. The scanner scans light across a surface of the original image, and the light reflected by the original image is directed to impinge on the color CCD 10. In response to the detection of the scanned original image, the color CCD 10 generates image data representing the scanned original image. The image data can be represented as RGB data, which correspond to red data, green data and blue data. If the color CCD 10 is a 4-line CCD sensor, then the image data can also include K data, which corresponds to black data.

The segmentation unit 12 receives the image data generated by the color CCD 10. The segmentation unit 12 analyzes the image data and segments the data into identifiable regions. An identifiable region can be a text region (or portion), a background region, a graphical region and a picture region. The process for segmenting image data into identifiable regions is well known. For example, U.S. Patent No. 5,687,252 to Hiroki Kanno, the entire contents of which are incorporated by reference, describes a segmenting process that may be carried out by the segmentation unit 12. The segmentation unit 12 provides control signals to the density converter 20 and the switch 22. The control signals provide information regarding how the density converter 20 and the switch 22 should operate. The segmentation unit 12 can be implemented as hardware, such as an ASIC or other processing circuit, as software, or as some combination thereof.

The color converter 14 converts the RGB data from the color CCD 10 into cyan, magenta and yellow (CMY) data. If the color CCD does not provide K data , the color converter 14 also generates K data from the received RGB data. Like the segmentation unit 12, the color converter 14 can be implemented as hardware, such as an ASIC or other processing circuit, as software, or as some combination thereof.

The color to B/W converter 1 6 converts the image data from the color CCD 10 into monochromatic data. The converter 16 can use algorithms known in the art that convert or transform the image data, such as RGB data, into monochromatic data. Transformations from RGB data into monochromatic data are conventional and well known to one skilled in the art. For example, "PostScript Language Reference, third edition," published by Adobe Systems Inc. describes an example of such a transformation on pages 474-475. Instead of having three values for each pixel in the color data (four values if the color CCD also generates K data), the monochromatic data only has a single value for each pixel. The value of each pixel in the monochromatic data corresponds to a density value of that pixel. Typically, the density value is an eight bit value between 0 and 255, where 0 is the lowest density value, and 255 is the highest density value. This scale of density values for the monochromatic data is referred to as a gray scale. The converter 16 can be implemented as hardware, such as an ASIC or other processing circuit, as software, or as some combination thereof.

The edge detector 18 is configured to examine the image data and identify edge portions of graphical regions in the image data. The edge portions correspond to the perimeter of the graphical region. For example, if the graphical region is square shaped, the edge portions of the graphical region would correspond to the four sides of the graphical region that define the perimeter of the graphical region. The edge detector 1 8 can make the identification of edge portions using information from the segmentation unit 12, which identifies data corresponding to a graphical region, or independently of the identification by the segmentation unit 12. It is also possible for the edge detector 18 and the segmentation unit 12 to be implemented as part of the same single unit. In addition to identifying the edge portions of the graphical region, the edge detector 18 can alter the density of the pixels in the edge portions to have a high density value. The edge detector 18 can be implemented as hardware, such as an ASIC or other processing circuit, as software, or as some combination thereof.

The density converter 20 adjusts the density values of the pixels of the image data output from the converter 16. As described above, each pixel output from the converter 1 6 corresponds to a monochromatic value. The density converter 20 can adjust the density values to increase or decrease the density. The adjustment of the density value is made in accordance with a control signal from the segmentation unit 12. The particular adjustment of the density value depends upon the region in which the pixel is present, as will be described in more detail below. Like the previously described components, the density converter 20 can be implemented as hardware, such as an ASIC or other processing circuit, as software, or as some combination thereof.

The switch 22 is coupled to receive the image data output from each of the color converter 14, the density converter 20 and the edge detector 18. The switch 22 also receives a control signal from the segmentation unit 12, which controls which input to the switch 22 will pass to provide a particular pixel of the image data to the image processing unit 24. If the edge detector 1 8 is configured to control the density converter 20, or is implemented as part of the segmentation unit 12, then the switch 22 may be configured to switch only between the outputs of the color converter 14 and the density converter 20. The switch 22 can be implemented as a hardware or software switch that is capable of providing a selected pixel to the image processing unit 24.

The image processing unit 24 is configured to perform one or more image processing functions on the image data received from the switch 22. The image processing functions include, for example, filtering, smoothing, dithering, halftone processing, error diffusion, gamma correction or other function that alters the image data to improve the reproduction of the original image. The image processing unit 24 can be implemented as hardware, such as an ASIC or other processing circuit, as software, or as some combination thereof.

The printer 26 receives the image data from the image processing unit 24 and converts the image data into a printer format for printing, such as raster image data. The printer 26 uses the raster image data to generate a reproduction of the original image.

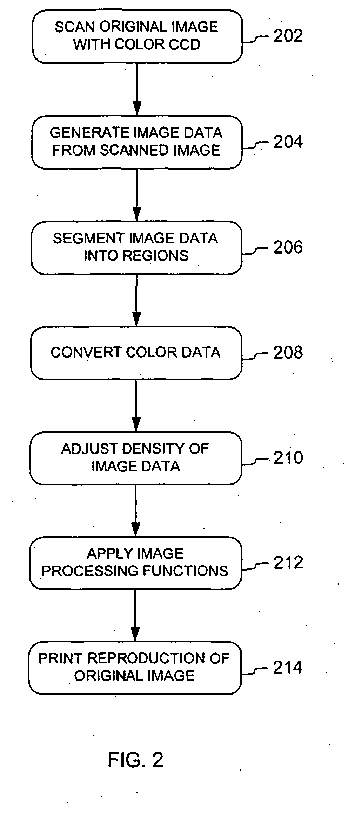

Fig. 2 is a flow diagram of an image reproduction process consistent with the present invention. The image reproduction process of Fig. 2 is directed to a process for reproducing a black and white (or monochromatic) image from an original color image. As shown in Fig. 2, the process first scans an original image with the color CCD 10 (step 202). As described above, a scanner (not shown) scans the original image, which is preferably placed on a glass document table, and the light reflected from the original image is received by the color CCD 10.

The color CCD 10 generates image data from the scanned original image (step 204). The image data generated by the color CCD 10 is either RGB data or RGB and K data, depending upon the implementation of the color CCD 10.

The segmentation unit 12 receives the image data generated by the color CCD 10 and segments the received image data into various regions (step 206). As described above, the regions can be, for example, text regions, background regions, graphical regions and picture regions. For each region, the segmentation unit 12 can identify each pixel within a particular region and generate a corresponding control signal, which identifies the particular pixel as being in a particular type of region.

The image data generated by the color CCD 10 is also received by the color to B/W converter 16, which converts the received image data into monochromatic data (step 208). More particularly, each pixel of the received image data is converted from the multiple color pixel value, i.e. RGB or RGBK, into K data only. Each pixel of the K data output from the converter 16 can be an eight bit value between 0 and 255, each value corresponding to a particular density.

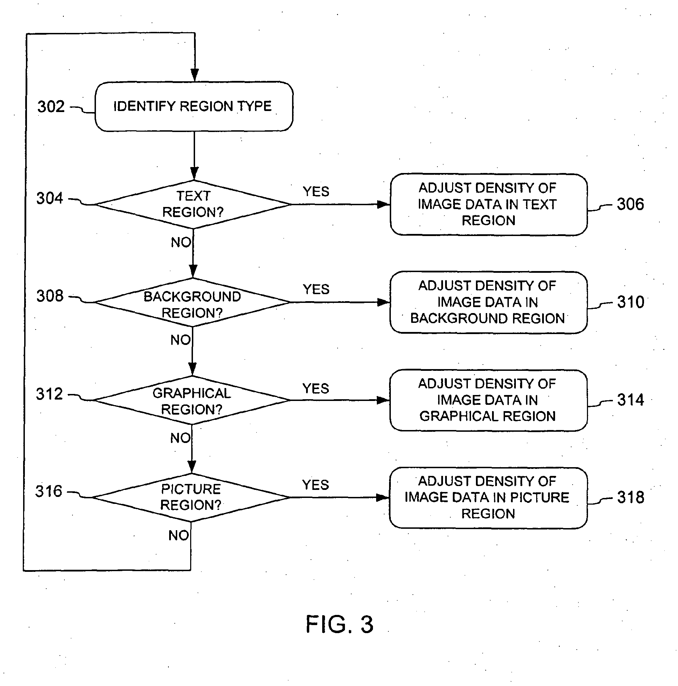

Each pixel of the image data output from the converter 16 is received by the density converter 20, which adjusts the density value of the received pixel in accordance with the control signal from the segmentation unit 12 (step 210). The manner in which the density of the received pixel is adjusted will be explained in conjunction with Figs. 3-7B. Fig. 3 is a flow diagram of an image data density adjustment process consistent with the present invention. As shown in Fig. 3, the process first identifies the region type of the received pixel (step 302). The identification of the region type of the received pixel is performed by the segmentation unit 12, which provides a control signal to the density converter 20 that identifies the region type of the received pixel.

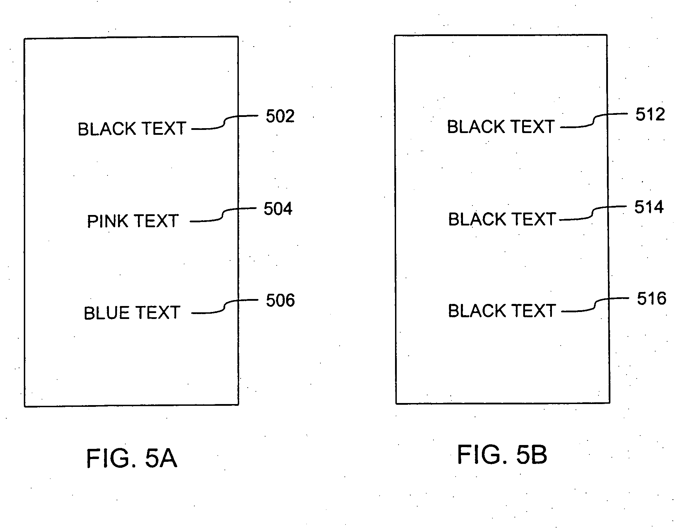

Based on the control signal received from the segmentation unit 12, the density converter 20 determines whether the received pixel is in a text region (step 304). If so, the density converter 20 adjusts the density of the received pixel of the image data (step 306). The density adjustment for the text region will be explained in conjunction with Figs. 5A and 5B.

Fig. 5A shows an example of an original image having black text 502, pink text 504 and blue text 506. Each of these three text regions is located by the segmentation unit 12, which identifies the pixels located in each text region and signals the density converter 20 when such a pixel is received by the density converter 20. For example, when a pixel in the pink text 504 is received by the density converter 20, the segmentation unit 1 2 signals the density converter 20 that the received pixel is in a text region.

In a conventional system, when reproducing in monochrome an original image having text of various colors, each text region is reproduced in black, but at various densities. The black text of the original image is reproduced with approximately the same density as the original image. The other text colors, however, such as pink and blue, are reproduced faintly, particularly in comparison to the black text. Since the density converter 20 of the image reproduction system of Fig. 1 knows that a particular pixel is part of a text region, it can increase the density of the pixel so that the reproduced pixel will have the same density as the other pixels in the other text regions.

Fig. 5B shows the reproduction of the original image of Fig. 5A when the density is adjusted by the density converter 20. As shown in Fig. 5B, the black text 502, pink text 504, and blue text 506 become black text 512, black text 514, and black text 516, respectively. The density converter 20 may further adjust each of the black text regions of Fig. 5B to have the same density, such as by setting the density of each pixel in a text region to a highest value, such as 255.

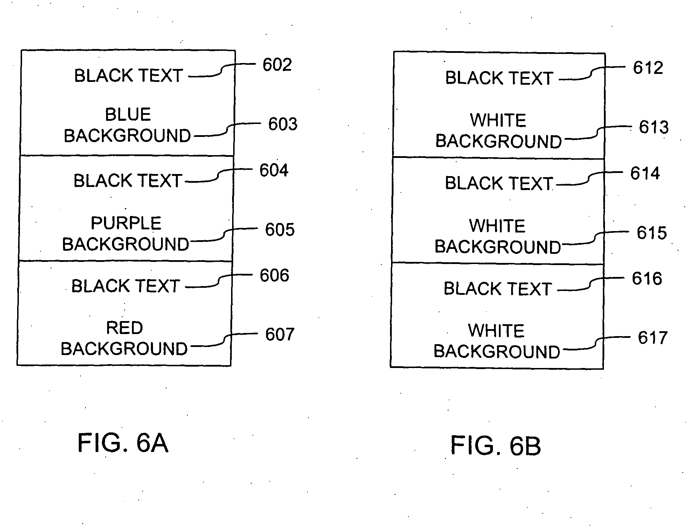

Returning to Fig. 3, if the pixel received by the density converter 20 is not in a text region, the density converter 20 then determines if the received pixel is in a background region (step 308). If so, the density converter 20 adjusts the density of the received pixel of the image data (step 310). The density adjustment for the background region will be explained in conjunction with Figs. 6A and 6B.

Fig. 6A shows an example of an original image having black text 602 in a blue background 603, black text 604 in a purple background 605 and black text 606 in a red background 607. Although each text region is shown in Fig. 6A as being black, it is possible for the text regions to be various colors, such as shown in Fig. 5A. Of course, the present embodiment contemplates essentially any variations in colors. The segmentation unit 12 locates each of the three text regions and each of the three background regions, which identifies the pixels located in each text region and each background region and signals the density converter 20 when such a pixel is received by the density converter 20. For example, when a pixel in the blue background 603 is received by the density converter 20, the segmentation unit 12 signals the density converter 20 that the received pixel is in a background region.

In a conventional system, when reproducing in monochrome an original image having text of various colors that is located in backgrounds of various colors, each text region and background region is reproduced in various densities of black. Because the background regions are also reproduced in black, the text present in the background region may be partially or completely obscured. Since the density converter 20 of the image reproduction system of Fig. 1 knows that a particular pixel is part of a text region or a background region, it can adjust the density of the pixels in the text regions and background regions so that when the pixels are reproduced, the text can be distinguished from the background.

Fig. 6B shows the reproduction of the original image of Fig. 6A when the density is adjusted by the density converter 20. As shown in Fig. 6B, the black text 602, black text 604, and black text 606 become black text 612, black text 614, and black text 616, respectively. In addition, the blue background 603, purple background 605, and red background 607 become white background 613, white background 615, and white background 617, respectively. To produce the text in black and the background in white, the density converter 20 adjusts the density of each pixel in a text region to a highest value, such as 255, and adjusts the density of each pixel in a background region to a lowest value, such as 0.

When reproducing the text with the highest density and the background with the lowest density, all information about the background of the original image is lost. As a result, the reproduced image of Fig. 5B, where the text was not located in a background color region, looks the same as the reproduced image of Fig. 6B. It is possible, however, to retain information about the background region of the original image in the reproduced image. In particular, instead of adjusting the density of the text regions to be the highest value, each text region can have the density values adjusted in accordance with a density of the background in which the text region is present. For example, the pixels in the black text 602 can have their density adjusted by th density converter 20 to be equal to the density of the blue background 603, while the density converter 20 adjusts the density of the blue background 603 itself to the lowest value.

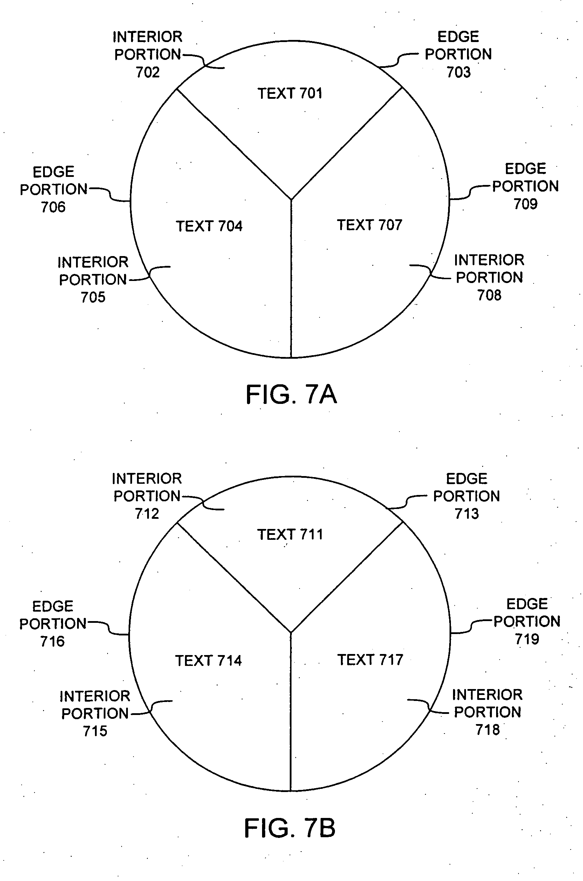

Returning again to Fig. 3, if the pixel received by the density converter 20 is not in a background region, the density converter 20 determines if the received pixel is in a graphical region (step 312). If so, the density converter 20 adjusts the density of the received pixel of the image data (step 314). The density adjustment for the graphical region will be explained in conjunction with Figs. 7A and 7B.

Fig. 7A shows an example of an original image having graphical regions. The original image is of a pie chart with three sections, each section corresponding to a different graphical region. Although each graphical region is shown as being spaced from each other one, it should be understood that the graphical regions can be contiguous. Each graphical region includes an interior portion 702, 705, 708 and an edge portion 703, 706, 709. In addition, one of the text regions 701, 704, 707 is located in a respective one of the interior portions 702, 705, 708. In this embodiment, each graphical region is presumed to be a uniform color, both in the interior and edge portions, i.e., the interior portions 702, 705, 708 have the same color as the respective edge portions 703, 706, 709. Each graphical region, however, can be a different color. For example, interior portion 702 and edge portion 703 can be red, and interior portion 705 and edge portion 706 can be blue.

In a conventional system, when reproducing in monochrome an original image having text of various colors that is located in graphical regions of various colors, each text region and graphical region is reproduced in various densities of black. Because the graphical regions are also reproduced in black, the text present in the graphical region can be partially or completely obscured. Since the density converter 20 of the image reproduction system of Fig. 1 knows that a particular pixel is part of a text region or a graphical region, it can adjust the density of the pixels in the text regions and graphical regions so that when the pixels are reproduced, the text can be distinguished from the interior portion of the graphical region. In addition, the density of the edge portions can also be adjusted to maintain the graphical shape in the image reproduction .

Fig. 7B shows the reproduction of the original image of Fig. 7A when the density is adjusted by the density converter 20. As shown in Fig. 7B, the text 701, 704, 707 become text 711, 714, 717, respectively, the interior portions 702, 705, 708 become interior portions 712, 715, 718, respectively, and the edge portions 703, 706, 709 become edge portions 713, 716, 719, respectively. When the original image of Fig. 7A is reproduced, the pixels in the text 711, 714, 717 are adjusted to be the highest density value, 255, or to correspond to the density value of the respective interior portion in which the text is located. For example, the density of the pixels in text 701 can be adjusted so that the density of the pixels in text 711 is the highest density value or is the density corresponding to the density of the interior portion 702.

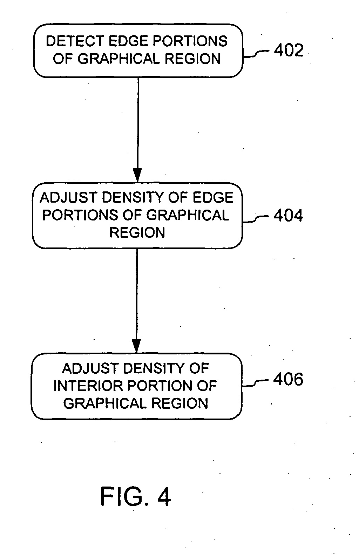

Further, the density of the pixels in the graphical regions are also adjusted. The adjustment of the density of the pixels in the graphical regions will be explained in conjunction with Fig. 4. Fig. 4 is a flow diagram of another image data density adjustment process consistent with the present invention. As shown in Fig. 4, the edge portion of the graphical region is detected by the edge detector 18 (step 402). As described above, the edge detector 18 can be a separate unit of the image reproduction system of Fig. 1 or can be implemented in combination with the segmentation unit 12.

The density of the edge portion of the graphical region is then adjusted (step 404). In particular, the pixels in a detected edge portion are adjusted to have the highest density, 255, so that the edge portions 713, 716, 719 in Fig. 7B are reproduced in black. Depending upon the implementation of the edge detector 18, the density adjustment can be performed by the edge detector 18 or, if implemented in combination with the segmentation unit 12, by the density converter 20 in response to a control signal from the combined edge detector 18 and segmentation unit 12.

In addition, the density of the interior portion of the graphical region is adjusted (step 406). In contrast to the edge portion, the density of the pixels in the interior portion of the graphical region are adjusted to have the lowest density, 0, to reproduce the interior portions 712, 715, 718 in Fig. 7B in white. As a result of these density adjustments, the text 711, 714, 717 is shown in black, and is not obscured by the interior portions 712, 715, 718, which are white. In addition, the shape of each graphical region is maintained because the edge portions 713, 716, 719 are in black.

Returning once more to Fig. 3, if the pixel received by the density converter 20 is not in a graphical region, the density converter 20 determines if the received pixel is in a picture region (step 316). If so, the density converter 20 may adjust the density of the received pixel of the image data (step 318). Unlike the text, background and graphical regions, it is generally preferable not to adjust the density of the pixels in the picture region, as the various shading and density of the monochrome reproduction is typically representative of the original color image. However, density adjustments can be made. For example, depending on the detected color of a pixel in a picture region, the density converter 20 can be configured to increase or decrease the density of the pixel.

Finally, returning to Fig. 2, having adjusted the density of the pixels, the switch 22 is controlled by the segmentation unit 12 to output a pixel from the color converter 14, the density converter 20 or the edge detector 18. If the image is being reproduced in color, then the switch 22 will select the pixels from the color converter 14. If the image is being reproduced in monochrome, then the switch 22 will select the pixels from the density converter 20, unless the pixel is in an edge portion of a graphical region, in which case the switch 22 will select the pixel from the edge detector 18. If the edge detector 18 is implemented as part of the segmentation unit 12, and all density adjustments are made by the density converter 20, then the switch 22 always selects the pixels from the density converter 20 when the image is being reproduced in monochrome.

The pixels selected by the switch 22 are provided to the image processing unit 24, which applies image processing functions (step 212). As described above, one or more image processing functions can be applied to the image data received by the image processing unit 24 to improve the quality of the reproduced image. After applying the image processing functions, the image is reproduced by the printer 26 (step 214).

The foregoing description of a preferred embodiment of the invention has been presented for purposes of illustration and description. Of course, the various steps of detecting text, background, graphical and picture regions can be done in any order. It is not intended to be exhaustive or to limit the invention to the precise form disclosed, and modifications and variations are possible in light in the above teachings or may be acquired from practice of the invention. The embodiments were chosen and described in order to explain the principles of the invention and as practical application to enable one skilled in the art to utilize the invention in various other embodiments and with various modifications are suited to the particular use contemplated. It is intended that the scope of the invention be defined by the claims appended hereto and their equivalents.

## Claims

1. A method for forming a monochromatic reproduction of a color document using a color CCD sensor, comprising:
scanning the color document using the color CCD sensor;
generating image data from the scanned color document;
detecting color text data in the image data, said color text data representing a color text portion;
adjusting a density of the color text data in the image data; and
forming the monochromatic reproduction of the color document based on the image data including the adjusted density of the colored text data.

2. A method according to claim 1, wherein the generated image data is color data, the method further comprising converting the image data from color data to monochromatic data.

3. A method according to claim 1, further comprising:
detecting color background data in the image data, said color background data representing a color background portion; and
adjusting a density of the color background data in the image data;
wherein the forming of the monochromatic reproduction is further based on the adjusted density of color background data.

4. A method according to claim 3, wherein the color text portion is formed in black in the monochromatic reproduction, and the color background portion is formed in white in the monochromatic reproduction.

5. A method according to claim 3, wherein the density of the color text data is adjusted to a highest density value, and the density of the color background data is adjusted to a lowest density value.

6. A method according to claim 3, wherein the density of the color text data is adjusted according to a density of the color background data if the detected color text portion is positioned in the detected color background portion.

7. A method according to claim 1, further comprising:
detecting graphical data in the image data, said graphical data representing a graphical region;
adjusting a density of the graphical data corresponding to edge portions of the detected graphical region as a first adjustment; and
adjusting a density of the graphical data corresponding to a remaining portion of the detected graphical region as a second adjustment different from the first adjustment,
wherein the forming of the monochromatic reproduction is further based on the adjusted density of the graphical region data.

8. A method according to claim 7, wherein the edge portions of the detected color graphical region are formed in black in the monochromatic reproduction, and the remaining portion of the detected graphical region is formed in white in the monochromatic reproduction.

9. A method according to claim 1, wherein the density of the color text data is adjusted to a highest density value.

10. A method according to claim 1, wherein the density of all of the color text is adjusted.

11. A method according to claim 1, further comprising:
detecting picture data in the image data, said picture data representing a picture region; and
leaving a density of the picture data unadjusted,
wherein the forming of the monochromatic reproduction is further based on the unadjusted density of picture data.

12. A system for forming a monochromatic reproduction of a color document, comprising:
a color CCD sensor that generates image data from a scanning of the color document;
a segmentation unit configured to detect color text data in the image data, said color text data representing a color text portion;
a density converter configured to adjust a density of the color text data in the image data; and
a printer that forms the monochromatic reproduction of the color document based on the image data including the adjusted density of the colored text data.

13. A system according to claim 12, wherein the image data generated by the color CCD is color data, the system further comprising a color converter that converts the image data from color data to monochromatic data.

14. A system according to claim 12, wherein, the segmentation unit is further configured to detect color background data in the image data, said color background data representing a color background portion,
wherein the density converter is further configured to adjust a density of the color background data in the image data, and
wherein the printer forms the monochromatic reproduction based on the adjusted density of color background data.

15. A system according to claim 14, wherein the printer forms the color text portion in black in the monochromatic reproduction and forms the color background portion in white in the monochromatic reproduction.

16. A system according to claim 14, wherein density converter adjusts the density of the color text data to a highest density value and the density of the color background data to a lowest density value.

17. A system according to claim 14, wherein the density converter adjusts the density of the color text data according to a density of the color background data if the detected color text portion is positioned in the detected color background portion.

18. A system according to claim 12, wherein the segmentation unit is further configured to detect graphical data in the image data, said graphical data representing a graphical region,
wherein the density converter is further configured to adjust a density of the graphical data corresponding to edge portions of the detected graphical region as a first adjustment, and to adjust a density of the graphical data corresponding to a remaining portion of the detected graphical region as a second adjustment different from the first adjustment, and
wherein the printer forms the monochromatic reproduction based on the adjusted density of the graphical region data.

19. A system according to claim 18, wherein the printer forms the edge portions of the detected color graphical region in black in the monochromatic reproduction, and forms the remaining portion of the detected graphical region in white in the monochromatic reproduction.

20. A system according to claim 12, wherein the density converter adjusts the density of the color text data to a highest density value.

21. A system according to claim 12, wherein the density converter adjusts the density of all of the color text.

22. A system according to claim 12, wherein the segmentation unit is further configured to detect picture data in the image data, said picture data representing a picture region,
wherein the density converter is further configured to leave a density of the picture data unadjusted, and
wherein the forming of the monochromatic reproduction is further based on the unadjusted density of picture data.
